# FASCICULE DE BREVET EUROPEEN

(11) **EP 3 241 137 B1**
(45) Date de publication et mention de la délivrance du brevet: **01.01.2020**
(21) Numéro de dépôt: 15808762.7
(22) Date de dépôt: 27.11.2015
(51) Int. Cl.: G06F 21/33, G06F 21/44, G06F 21/62, G06F 21/77, H04L 9/32, B42D 25/305, H04L 29/06, G07C 9/00, H04W 12/02

(54) **PROCEDE MIS EN OEUVRE DANS UN DOCUMENT D'IDENTITE ET DOCUMENT D'IDENTITE ASSOCIE**
IN EINEM IDENTITÄTSDOKUMENT DURCHGEFÜHRTES VERFAHREN UND ENTSPRECHENDES IDENTITÄTSDOKUMENT
METHOD CARRIED OUT IN AN IDENTITY DOCUMENT AND CORRESPONDING IDENTITY DOCUMENT

(30) Priorité: 03.12.2014 FR 1461885
(43) Date de publication de la demande: 08.11.2017
(73) Titulaire: IDEMIA France, 92400 Courbevoie (FR)
(72) Inventeur: FERAUD, Alban, 92700 Colombes (FR); SOURDRILLE, Arnaud, 92700 Colombes (FR)
(74) Mandataire: Jacobacci Coralis Harle
(86) Numéro de dépôt international: PCT/FR2015/053251
(87) Numéro de publication internationale: WO 2016/087754

(56) Documents cités:
- EP-A2- 1 028 396
- DE-A1-102006 061 338
- GB-A- 2 427 055
- "Security Target SOMA-c004 Electronic Passport EAC-SAC-AA Public Version Common Criteria version 3.1 revision 4 Assurance Level EAL 5+", , 17 novembre 2014 (2014-11-17), XP055215561, Extrait de l'Internet: URL:https://www.commoncriteriaportal.org/f iles/epfiles/ST-lite279.pdf [extrait le 2015-09-23]

## Description

### DOMAINE TECHNIQUE AUQUEL SE RAPPORTE L'INVENTION

La présente invention concerne de manière générale le domaine de l'identité numérique.

Elle concerne plus particulièrement un procédé mis en œuvre dans un document d'identité et un document d'identité associé.

### ARRIERE-PLAN TECHNOLOGIQUE

Il est connu d'utiliser des documents d'identité comprenant un microcircuit et des moyens pour faire communiquer le microcircuit avec un terminal, tel qu'un système d'inspection de documents d'identité.

Le microcircuit est conçu pour émettre des données d'identité mémorisées dans le microcircuit en réponse à une requête reçue dudit système d'inspection.

Ainsi, lorsqu'un individu présente un tel document d'identité, les données d'identité sont reçues par le terminal. Ces données d'identité peuvent alors être affichées afin qu'un agent préposé au terminal vérifie la correspondance entre l'image affichée (représentant par exemple le visage de l'individu) et l'individu présent, ou utilisées afin d'être comparées à des données biométriques obtenues auprès de l'individu présent (par exemple par prise d'une empreinte digitale).

Les échanges possiblement mis en œuvre entre un tel document d'identité et un système d'inspection sont par exemple décrits par les documents *"BSI TR-03110 Technical Guideline Advanced Security Mechanisms for Machine Readable Travel Documents"* produits par l'Office Fédéral Allemand de la sécurité informatique BSI ("*Bundesamt für Sicherheit in der Informationstechnik*").

On connait par ailleurs du document GB2427055 un dispositif d'identification portatif, conçu pour fournir à un appareil distant des informations relatives à un porteur du dispositif, conformément à des droits d'accès dont dispose cet appareil distant. Les informations relatives à ces droits d'accès sont stockées dans le dispositif d'identification portatif.

On connait également du document DE102006061338 un procédé d'authentification d'une carte SIM, comprenant des étapes de :
- réception par la carte SIM d'une demande d'authentification provenant d'un dispositif de communication.
- évaluation d'une fiabilité de la demande d'authentification par la carte SIM, et
- envoi, au dispositif de communication, d'une réponse à la demande d'authentification lorsque cette demande est évaluée comme étant fiable.

On connait aussi du document EP1028396 une carte à circuit intégré comprenant différentes zones mémoire, chaque zone mémoire comprenant deux variables binaires spécifiant, pour un type donné de dispositifs d'interrogation destinés à interroger la carte, si ce type de dispositif d'interrogation dispose de droits de lecture et/ou d'écriture dans cette zone mémoire.

### OBJET DE L'INVENTION

Dans ce contexte, la présente invention est définie dans les revendications 1 et 14, respectivement. Des modes de réalisation particuliers sont définis dans les revendications dépendantes.

La présente invention propose un procédé mis en œuvre dans un document d'identité comprenant un microcircuit et des moyens pour faire communiquer le microcircuit avec un terminal, le microcircuit étant conçu pour autoriser l'émission de données (et, par exemple, émettre ces données), obtenues (directement ou indirectement) à partir de données mémorisées dans une zone de stockage en réponse à une requête reçue dudit terminal,
comprenant en outre les étapes suivantes :
- réception par le microcircuit d'un identifiant dudit terminal,
- comparaison, au moins en partie, dudit identifiant du terminal et d'au moins une partie d'un identifiant mémorisé dans le microcircuit, et
- réalisation d'une action déterminée en fonction du résultat de ladite comparaison,
ladite action (Ai) comprenant une modification desdites données mémorisées dans la zone de stockage.

Par « document d'identité » on entend ici un objet apportant des informations sur son porteur. Un tel objet peut être un document de voyage électronique, une carte d'identité, une carte d'usager, une carte de professionnel, ou encore un appareil électronique comme un téléphone portable ou une tablette à écran tactile.

Les données mémorisées dans la zone de stockage comprennent des données liées au porteur du document : nom, prénom, photographie, de son visage notamment, données biométriques, ainsi par exemple que des données d'application ou des applications permettant de générer des signatures électroniques. La zone de stockage peut être localisée directement dans le microcircuit, au sein d'un module de mémorisation, ou être répartie au sein d'un réseau informatique avec lequel le microcircuit communique (en particulier, au sein d'un système de stockage dématérialisé, ou « cloud », selon la dénomination anglo-saxonne).

Les données dont l'émission est autorisée au cours de ce procédé sont obtenues directement ou indirectement à partir des données mémorisées dans la zone de stockage. En d'autres termes, les données dont l'émission est autorisée peuvent correspondre :
- à des données contenues dans la zone de stockage, ou
- à des données obtenues par transformation de données contenues dans la zone de stockage (plusieurs exemples de telles transformations sont détaillés lors de la description des figures), ou encore
- à des données produites à partir de données contenues dans la zone de stockage, comme par exemple une signature électronique, produite à partir de données cryptographiques contenues dans la zone de stockage.

Le fait que le microcircuit détermine et exécute lui-même une action, en fonction de l'identifiant associé à un terminal permet une grande souplesse dans la configuration d'un tel document d'identité électronique, et dans l'ajout ou la suppression, et l'activation ou la désactivation de fonctionnalités supplémentaires. Cela permet en effet, de bénéficier de ces fonctionnalités supplémentaires, tout en maintenant une compatibilité très large d'un tel document d'identité avec des réseaux existants de terminaux, et avec les systèmes de gestion d'informations gérant de tels ensembles de terminaux, puisque la mise en œuvre de ces fonctionnalités supplémentaires ne nécessite pas de modifications d'un tel réseau de terminaux, ou du système d'information correspondant, ce qui est extrêmement avantageux.

D'autres caractéristiques non limitatives et avantageuses d'un procédé conforme à l'invention sont les suivantes :
- il comprend en outre une étape d'authentification dudit terminal par le microcircuit,
- une partie au moins desdites données émises sont émises postérieurement à l'étape de réalisation de ladite action,
- une partie au moins desdites données émises sont émises quel que soit le résultat de l'étape de comparaison,
- ladite modification comprend la suppression ou l'ajout de données de marquage initialement combinées à des données biométriques d'un individu,
- ladite suppression est réalisée seulement si l'identifiant reçu correspond à un identifiant mémorisé dans ledit microcircuit et associé à un terminal prévu ainsi lors de la production dudit document d'identité pour délivrer ce dernier à son porteur.

Il est également prévu que ladite modification de données d'identité mémorisées dans la zone de stockage vise une variable d'activation, lorsqu'un identifiant reçu correspond à un identifiant mémorisé dans ledit microcircuit et associé à un terminal prévu ainsi lors de la production dudit document d'identité pour délivrer ce dernier à son porteur, et que le microcircuit est conçu pour, préalablement à l'émission des données obtenues à partir des données mémorisées dans une zone de stockage, supprimer ou ajouter des données de marquage auxdites données obtenues en fonction de ladite variable d'activation.

L'invention propose également que :
- ladite action comprend l'incrémentation de la valeur d'un compteur dudit microcircuit enregistrant le nombre d'exécutions par ce dernier d'une action déterminée donnée,
- ladite action est en outre déterminée en fonction de la valeur du compteur,
- lesdites données biométriques dans lesquelles sont supprimées des données de marquage sont des données représentatives d'une image, et que ladite suppression est réalisée par le microcircuit si la valeur du compteur indique que ladite suppression n'a été auparavant réalisée aucune fois par le microcircuit,
- ladite action comprend une modification du niveau de qualité de données biométriques mémorisées dans la zone de stockage,
- ladite action comprend l'incrémentation de la valeur d'un compteur mémorisé dans le microcircuit et indicatif du nombre d'identifications par le microcircuit d'un terminal donné,
- ladite action comprend la sélection desdites données d'identité émises parmi un ensemble de données d'identité contenues dans ledit microcircuit, en fonction du résultat de ladite comparaison,
- ladite authentification comprend la vérification, au moyen d'une clef publique mémorisée dans ledit microcircuit, d'une signature d'un certificat électronique reçu du terminal, et que
- ledit certificat électronique comprend une donnée permettant d'identifier un terminal ou une famille de terminaux parmi une pluralité de terminaux.

Il est aussi prévu qu'un champ dudit certificat électronique est un « Certificate Holder Reference (CHR) » comme défini dans le document "BSI TR-03110 Technical Guideline Advanced Security Mechanisms for Machine Readable Travel Documents" produits par l'Office Fédéral Allemand de la sécurité informatique BSI ("Bundesamt für Sicherheit in der Informationstechnik"), ou une troncature de celui-ci, ledit « Certificate Holder Reference (CHR) » comprenant les éléments suivant concaténés :
- un code de pays conforme à la norme ISO 3166-1 ALPHA-2 de 2 octets, et
- un code mnémonique de taille variable allant jusqu'à 9 caractères conforme à la norme ISO/IEC 8859-1, et
- une séquence de 5 caractères numériques ou alphanumériques conforme à la norme ISO/IEC 8859-1.

Selon une autre possibilité, ladite donnée d'identification est une clef publique d'authentification du terminal, ou une représentation résultant d'une transformation déterministe de ladite clef publique.

On peut prévoir également que ladite authentification comprend une étape de vérification, au moyen d'une clef publique du terminal reçue du terminal, d'une réponse à un défi émis par le microcircuit, signée au moyen d'une clef privée du terminal.

Les effets avantageux produits par ces caractéristiques additionnelles sont détaillés ci-dessous, lors de la description des figures annexées.

Un document d'identité comprenant un microcircuit comportant un module de mémorisation, et des moyens pour faire communiquer le microcircuit avec un terminal, est également prévu, le microcircuit étant conçu pour autoriser l'émission des données obtenues à partir de données mémorisées dans une zone de stockage, en réponse à une requête reçue dudit terminal,
- ledit module de mémorisation mémorisant en outre au moins un identifiant et ledit microcircuit étant en outre conçu pour :
- recevoir un identifiant dudit terminal,
- comparer, au moins en partie, l'identifiant reçu dudit terminal et une partie au moins de l'identifiant mémorisé dans ledit module de mémorisation, et
- réaliser une action déterminée en fonction du résultat de ladite comparaison,
ladite action (Ai) comprenant une modification desdites données mémorisées dans la zone de stockage.

Les caractéristiques additionnelles présentées ci-dessus en termes de procédé peuvent également s'appliquer à un tel document d'identité.

### DESCRIPTION DETAILLEE D'UN EXEMPLE DE RÉALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 représente schématiquement un document d'identité comprenant une antenne et un microcircuit dans lequel un procédé selon l'invention peut être mis en œuvre, et les principaux éléments d'un tel microcircuit,
- la figure 2 représente schématiquement la structure de données d'identification de systèmes d'inspection contenues dans ledit microcircuit,
- la figure 3 représente schématiquement une partie des étapes mises en œuvre lors de la fabrication, de la mise en service et de l'utilisation d'un tel document d'identité,

- la figure 4 représente schématiquement les principales étapes d'un procédé selon l'invention,
- la figure 5 représente schématiquement un exemple de transformation de données d'identité, représentatives d'une image du visage du porteur d'un document d'identité, pouvant être réalisée au cours d'un procédé selon l'invention,
- la figure 6 représente schématiquement les principales étapes d'un procédé selon l'invention mis en œuvre lors de la délivrance d'un document d'identité à son porteur et dans lequel une telle transformation est avantageusement appliquée.

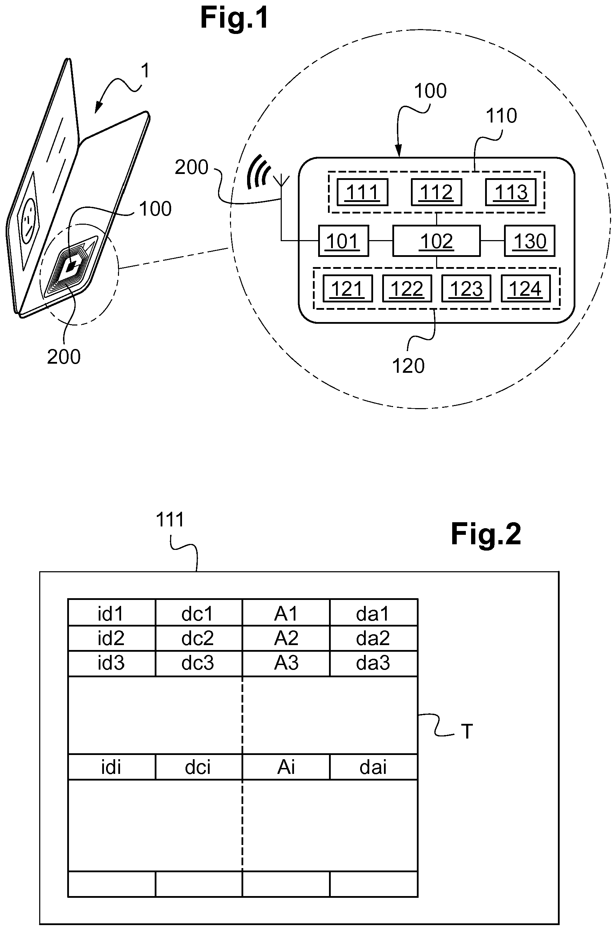

La figure 1 représente schématiquement un document d'identité 1 comprenant une antenne 200 et un microcircuit 100, tel par exemple qu'un document de voyage électronique, une carte d'identité, une carte d'usager ou une carte de professionnel, dans lequel un procédé selon l'invention peut être mis en œuvre.

L'antenne 200 est reliée à un module de communication 101 du microcircuit. Le module de communication 101 adapte les signaux électriques reçus de l'antenne 200 de manière à ce qu'il puisse être utilisés ensuite par un module de commande 102, tel qu'un microprocesseur.

L'antenne 200 permet ainsi au microcircuit 100 d'entrer en communication avec un terminal (par exemple un système d'inspection de documents d'identité), et notamment de recevoir, sans contact, des données en provenance de ce dernier. Dans la suite de ce document, on désigne par « terminal » :
- un terminal de communication interfaçant le document d'identité 1 avec une application (par exemple une application de signature électronique), ou
- un système d'inspection de documents de voyage électroniques (ou « Machine Readable Travel Documents », selon l'expression anglo-saxonne), tel qu'un terminal douanier de lecture et de contrôle de documents de voyage, ou
- une application interagissant avec le système informatique contenu dans le microcircuit 100.

L'antenne 200, associée au module de communication 101, peut aussi émettre des données délivrées par le microcircuit 100 et destinées à un tel terminal. Le protocole utilisé lors de ces échanges peut par exemple être conforme à la norme ISO/CEI 18092, ou à la norme ISO/CEI 14443, ou à toute autre norme adaptée au document d'identité 1 et au terminal.

Le microcircuit 100 comporte également un module de mémorisation divisé en zones de mémorisation distinctes, notamment :
- une zone de mémorisation où sont enregistrées des données à usage interne 110 utilisées par le microcircuit pour son fonctionnement,
- une zone de mémorisation où sont enregistrées des données à communiquer (données utilisateur) 120, et
- une zone de mémorisation où sont enregistrées des données 130 de suivi de l'utilisation du document d'identité 1, pouvant à la fois être utilisées par le microcircuit pour son fonctionnement et être communiquées à l'extérieur par ce dernier.

Dans ce mode de réalisation, la zone de stockage, comprenant les données à partir desquelles sont obtenues les données émises par le microcircuit (100), est ainsi comprise dans le microcircuit (100) lui-même. Dans d'autres modes de réalisation, cette zone de stockage peut être répartie au sein d'un réseau informatique avec lequel le microcircuit communique, comme mentionné ci-dessus.

Les données à usage interne 110 peuvent comprendre :
- des données d'identification de terminaux 111, présentées plus en détail lors de la description de la figure 2, contenant notamment des identifiants de systèmes d'inspection susceptibles d'échanger des informations avec le microcircuit 100,
- des données d'application 112, par exemple un système d'exploitation, des programmes informatiques, dont un programme comprenant des instructions qui, lorsqu'elles sont exécutées par le module de commande 102, permettent de mettre en œuvre un procédé selon l'invention, et, de manière optionnelle, des données cryptographiques additionnelles utilisées par le module de commande 102 pour chiffrer/déchiffrer, signer/vérifier la signature des informations échangées par le microcircuit par l'intermédiaire de l'antenne 200 ou pour en supprimer des données de marquage, et
- des données privées 113 comprenant par exemple des données biométriques du porteur du document de voyage électronique en haute définition, et une copie de données à usage national 124, telles que présentées ci-dessous.

Les données à communiquer 120 peuvent comprendre notamment :
- des données 121 d'authentification du document d'identité 1 ou des données d'identification du porteur qu'il contient, telles qu'un certificat électronique, contenant par exemple une signature électronique produite par l'entité émettrice dudit document d'identité 1 à l'aide d'une clef (cryptographique) privée, ladite entité émettrice pouvant mettre à disposition d'entités de son choix une clef (cryptographique) publique permettant de vérifier l'authenticité du document d'identité 1 par vérification de ladite signature ;
- des données d'identité publiques 122 comprenant par exemple le nom du porteur du document d'identité 1, sa date de naissance, sa nationalité, un numéro de série du document d'identité, et sa date d'expiration ; une copie de ces données peut être présente aussi dans les données privées 113 ;
- des données d'identité à accès restreint 123 comprenant par exemple des données biométriques du porteur du document de voyage électronique, telles que des données représentatives d'une image de son visage, d'une de ses mains, de l'un de ses iris, ou de son réseau veineux ; ces données biométriques peuvent aussi comprendre des données représentatives d'une, ou de plusieurs empreintes digitales du porteur ; et
- des données à usage national 124 dont l'usage est réservé à des entités de l'Etat émetteur du document d'identité 1 ou à des entités externes autorisées par ce dernier.

Les données 130 de suivi de l'utilisation du document d'identité peuvent comprendre la valeur d'un compteur indiquant le nombre de fois où le document d'identité 1 a été présenté à un terminal donné. Dans le cas où le document d'identité est un document de voyage électronique, les données 130 peuvent également comprendre, par exemple, la liste des points de contrôle frontaliers auxquels ce dernier a été présenté.

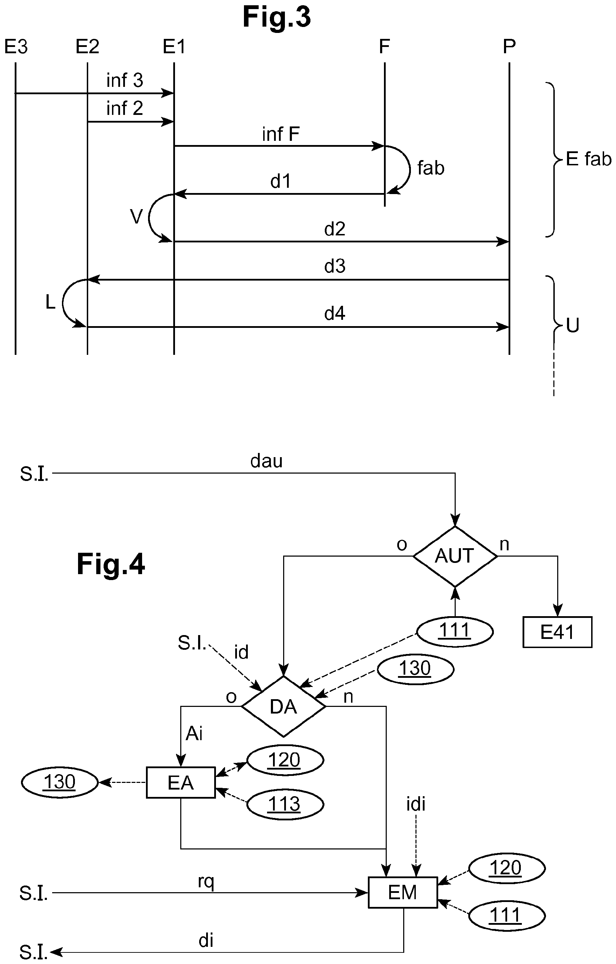

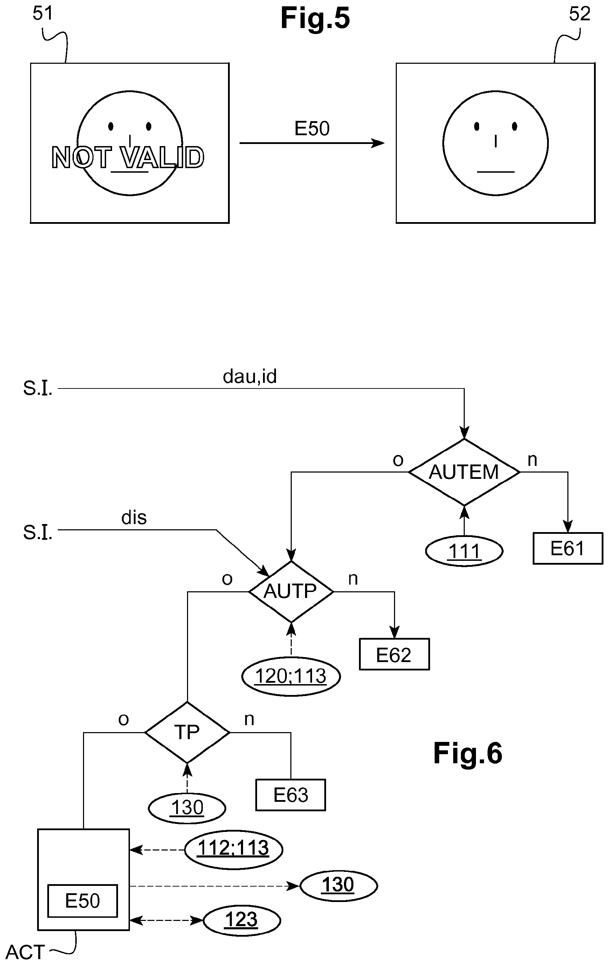

Dans un procédé selon l'invention, dont des exemples de réalisation sont détaillés ci-dessous, notamment lors de la description des figures 4 et 6, le microcircuit 100 peut transmettre à un terminal une partie des données à communiquer 120, en fonction de droits d'accès dont dispose ce terminal. La sélection, parmi les données contenues dans le microcircuit, des données rendues accessibles à un terminal donné, peut être réalisée :
- soit explicitement, en fonction de données dai décrivant ces droits d'accès, et comprises dans les données d'identification de systèmes d'inspection 111, comme expliqué ci-après,
- soit implicitement, comme conséquence de la configuration dans laquelle se trouve le microcircuit 100, ou comme conséquence d'une opération réalisée par celui-ci suite à l'identification dudit terminal.

La manière dont peuvent être hiérarchisés ces droits d'accès est illustrée ci-dessous sur un exemple, dans lequel le document d'identité 1 est un document de voyage électronique. Dans cet exemple :
- les données d'identité publiques 122 peuvent être transmises par le microcircuit à tout terminal avec lequel il communique, de même que les données d'authentification 121 du document de voyage électronique ;
- les données d'identité à accès restreint 123, en particulier des données biométriques du porteur du document de voyage électronique, peuvent par exemple être transmises par le microcircuit à des systèmes d'inspection identifiés grâce aux données d'identification 111 comme appartenant à des Etats autorisés par l'Etat émetteur du document de voyage électronique à accéder à de telles données biométriques ;
- les données à usage national 124, telles par exemple que le numéro de sécurité sociale du porteur du document de voyage électronique, peuvent être transmises par le microcircuit à des systèmes d'inspection identifiés grâce aux données d'identification 111 comme appartenant à l'Etat émetteur du document de voyage électronique ; et
- les données 130 de suivi de l'utilisation du document de voyage électronique, contenant par exemple la liste des points de contrôle frontaliers auxquels a été présenté le document de voyage électronique, et éventuellement les dates correspondantes, peuvent être transmises par le microcircuit à des systèmes d'inspection identifiés grâce aux données d'identification 111 comme appartenant au service des douanes de l'Etat émetteur du document de voyage électronique, ou comme appartenant à l'entité de cet Etat chargée de délivrer le document de voyage électronique.

Les zones de mémorisation où sont enregistrées les données à usage interne 110, les données à communiquer 120, et les données 130 de suivi de l'utilisation du document d'identité peuvent être réparties dans une ou plusieurs mémoires non volatiles réinscriptibles, de type EEPROM ou Flash NAND, par exemple.

La figure 2 représente schématiquement la structure des données 111 d'identification de systèmes d'inspection. Ces dernières sont organisées sous la forme d'une table de correspondance T qui contient une liste d'identifiants de systèmes d'inspection (id1, id2...idi...), lesquels pouvant être éventuellement tronqués, de sorte à désigner une famille de terminaux. Des actions (A1, A2...Ai...) sont associées à ces identifiants. Par exemple, comme le montre la figure 2, l'action A1 est associée à l'identifiant id1. De manière optionnelle, des droits d'accès (da1, da2...dai...) peuvent aussi être associés aux identifiants (id1, id2...idi...) dans la table de correspondance T.

Comme cela est décrit plus en détail ci-dessous, l'authentification et l'identification, par le microcircuit, d'un terminal avec lequel il communique, s'accompagne de l'exécution, par le microcircuit, de l'action que la table de correspondance T lui associe. L'exécution de cette action peut dépendre de conditions supplémentaires spécifiques, précisées dans la table T, en correspondance de l'action et/ou de l'identifiant concernés. Une telle condition supplémentaire spécifique peut par exemple être que ladite action n'a précédemment été réalisée aucune fois par le microcircuit. Une telle condition peut par exemple être vérifiée concrètement en testant la valeur d'un compteur (cette valeur faisant partie des données 130 de suivi de l'utilisation du document d'identité).

Dans la table de correspondance T, plusieurs identifiants différents peuvent être regroupés en un même ensemble, et associés ainsi à une action commune. Par exemple, les identifiants associés aux systèmes d'inspection douaniers de postes frontaliers de sortie d'un Etat émetteur d'un document de voyage électronique peuvent être regroupés en un ensemble, auquel est associée une action commune, comprenant par exemple l'effacement des données 124 réservées à un usage national.

Plusieurs systèmes d'inspection physiquement différents peuvent par ailleurs être associés à un même identifiant de la table de correspondance T.

Un identifiant peut être présent dans la table de correspondance T sans qu'une action ne lui soit associée. Autrement formulé, un terminal peut être identifié dans la table de correspondance T comme étant autorisé à communiquer avec le microcircuit (de par la présence de son identifiant dans cette dernière), sans pour autant qu'une action lui soit associée, ou, formulé encore autrement, une telle action peut consister pour le microcircuit 100 à n'effectuer aucune opération.

Enfin, les identifiants id1, id2...idi contenus dans la table de correspondance T peuvent être associés à des données cryptographiques dc1,dc2...dci, telles que des clefs cryptographiques, permettant par exemple d'authentifier la provenance de données reçues d'un terminal.

Dans un mode de réalisation particulier, les identifiants id1,id2...idi sont adaptés à être comparés à un identifiant d'un terminal transmis par ce dernier. Un tel identifiant est par exemple le champ « Certificate Holder Reference », une clef publique CP2 propre à ce terminal (ou à ce système d'inspection), ou bien des données obtenues par une transformation déterministe de cette dernière (c'est-à-dire une empreinte numérique de cette clef CP2), transmis au sein d'un certificat dont le format est conforme au format recommandé par l'Office Fédéral Allemand de la sécurité informatique BSI (« Bundesamt für Sicherheit in der Informationstechnik ») dans le cadre des dispositions de contrôle de documents de voyage électroniques EAC (selon l'acronyme anglo-saxon de « Extended Access Control », ou Contrôle d'Accès Etendu). Le format d'un tel certificat contenant notamment le champ « Certificate Holder Référence » est précisé dans le rapport technique « TR-03110-3 : Advanced Security Mechanisms for Machine Readable Travel Documents, part 3 : common spécifications », version 2.10 du 20 mars 2012 (en particulier dans les annexes A.6.1 et C.2.4 de ce rapport) produit par l'Office Fédéral Allemand de la sécurité informatique BSI (« Bundesamt für Sicherheit in der Informationstechnik »).

Dans ce mode de réalisation particulier, les données cryptographiques dc1,dc2...dci contiennent une clef cryptographique publique CP1 d'une autorité de certification qui permet de vérifier une signature électronique des données transmises par un terminal pour s'identifier et s'authentifier. Cette clef cryptographique publique CP1 est par exemple propre à l'organisation à laquelle appartient le terminal. Les données transmises par le terminal pour s'identifier et s'authentifier comprennent, dans ce mode de réalisation, un certificat tel que présenté ci-dessus, et une clef publique CP2 contenue dans ce certificat. Cette clef publique CP2 est utilisée par le microcircuit 100 pour authentifier finalement le terminal, par un procédé de type « défi-réponse ».

La figure 3 représente schématiquement une partie des étapes mises en œuvre lors de la fabrication, de la mise en service et de l'utilisation du document d'identité 1, dans le but d'illustrer l'interaction entre les différentes entités intervenant au cours de ces étapes. Sur cette figure, le temps s'écoule du haut vers le bas. Les entités impliquées dans la réalisation de ces étapes comprennent:
- un individu à qui est destiné le document d'identité 1 et qui est identifié par ce dernier, dénommé ici le porteur (P) du document d'identité,
- une entité émettrice E1, par exemple un Etat, sous la responsabilité de laquelle est émis le document d'identité 1,
- une entité F chargée par l'entité émettrice E1 de toute ou d'une partie de la fabrication du document d'identité 1, et
- deux entités clientes E2 et E3 auprès desquelles le document d'identité 1 peut également être utilisé.

Préalablement à la fabrication du document d'identité 1, les entités clientes E2 et E3 transmettent à l'entité émettrice E1 des données destinées à être mémorisées dans le microcircuit 100 du document d'identité 1 (échanges d'informations inf2 et inf3), comme par exemple des clefs (cryptographiques) publiques telles que la clef publique CP1 présentée ci-dessus. Ces données permettent au document d'identité 1 d'être utilisé au sein d'un réseau d'entités (comprenant par exemple les entités E1, E2 et E3), comme cela est expliqué ci-dessous. La distribution de ces données et leur authentification peut être réalisée sous le contrôle d'une autorité de certification, ou d'un réseau d'autorités de certification, ce qui est souhaitable vu le caractère sensible de ces données, utilisées à des fins de sécurité.

L'entité émettrice E1 peut ensuite transmettre à l'entité F des données nécessaires à la fabrication du document d'identité 1 (échange d'informations infF) comprenant par exemple des données d'identité du futur porteur P du document d'identité 1, des identifiants de systèmes, les données transmises par les entités E2 et E3 mentionnées au paragraphe précédent, et, de manière générale, l'ensemble des données nécessaires à l'établissement de la table de correspondance T. Le document d'identité 1 est ensuite fabriqué (étape fab) puis retourné à l'entité émettrice (transfert d1).

L'entité émettrice E1 peut alors procéder à une vérification et/ou à une activation V du document d'identité 1 au terme de laquelle il est finalement délivré (transfert d2) à son porteur P. Un exemple de mise en œuvre d'une telle activation est détaillé ci-dessous lors de la description des figures 5 et 6. Cette délivrance marque la fin des étapes de fabrication Efab du document d'identité 1.

Dans la phase d'utilisation U de ce document d'identité 1, son porteur P peut notamment l'utiliser auprès d'entités, par exemple pour s'identifier, (auprès de l'entité E2, dans cet exemple). Dans ce cas, le porteur P du document d'identité 1 le transmet à un terminal de l'entité E2 (transfert d3) qui procède alors à la lecture électronique L dudit document 1.

Lors de cette lecture, le terminal qui communique avec le microcircuit 100 du document d'identité 1 peut tout d'abord procéder à une authentification de ce dernier. Cette étape d'authentification du document d'identité 1 ne fait pas en propre l'objet de la présente invention et ne sera donc pas décrite en détail. On notera seulement qu'elle peut être réalisée notamment grâce aux données d'authentification 121 du document d'identité 1 contenues dans le microcircuit 100, et qu'elle peut s'accompagner de la création d'un canal d'échanges sécurisés (par chiffrement et signature des données) entre le terminal et le microcircuit 100.

Le terminal est ensuite authentifié et identifié par le microcircuit 100 du document d'identité 1, qui peut alors lui délivrer des données d'identité du porteur P, comme cela est détaillé ci-dessous lors de la description de la figure 4. Après ces étapes de lecture L du document d'identité 1, ce dernier est restitué à son porteur P (transfert d4).

La figure 4 représente schématiquement les principales étapes d'un procédé selon l'invention, mis en œuvre dans un microcircuit 100 d'un document d'identité 1 tel que celui présenté ci-dessus. Ce procédé de configuration, ou de reconfiguration, est mis en œuvre pendant toute la phase d'utilisation U du document d'identité 1, lorsqu'un terminal se connecte au microcircuit 100 pour y lire les données d'identité de son porteur P. L'ensemble des étapes représentées sur la figure 4 est réalisé par le microcircuit 100.

Ce procédé débute par exemple après des étapes optionnelles au cours desquelles le terminal S.I. (par exemple un système d'inspection) peut authentifier le document d'identité 1, telles que mentionnées précédemment.

Ce procédé commence par une étape AUT d'authentification du terminal S.I. par le microcircuit 100 avec lequel il communique, sur la base de données d'authentification dau reçues du terminal S.I.

Dans un mode de réalisation particulier, ces données d'authentification dau comprennent un certificat contenant un identifiant de type « Certificate Holder Référence » et une clef publique CP2 tels que présentés ci-dessus lors de la description de la figure 2.

L'authentification du terminal S.I. peut alors avantageusement être réalisée conformément aux recommandations des dispositions de contrôle de documents de voyage électroniques EAC (selon l'acronyme anglo-saxon de « Extended Access Control », ou Contrôle d'Accès Etendu) décrites dans les rapports techniques « TR-03110 », version 2.10 du 20 mars 2012 produit par l'Office Fédéral Allemand de la sécurité informatique BSI (« Bundesamt für Sicherheit in der Informationstechnik »).

Cela contribue à rendre un document d'identité comportant un microcircuit, dans lequel est mis en œuvre un tel procédé, compatible avec le réseau de systèmes d'inspection de documents de voyage électroniques mis en place très largement au sein de l'Union Européenne notamment, dans le cadre des dispositions de « Extended Access Control » mentionnées ci-dessus.

Par exemple, le microcircuit 100 vérifie tout d'abord, au moyen de la clef publique CP1 (mémorisée dans le microcircuit comme déjà indiqué), la signature contenue dans le certificat reçu du terminal.

Si cette vérification se déroule avec succès, le microcircuit 100 génère un défi (par exemple un nombre aléatoire) et émet ce défi à destination du terminal afin que celui-ci produise une signature en utilisant notamment ce défi et sa propre clef privée d'authentification. Le terminal envoie alors en réponse la signature produite au microcircuit 100 afin que celui-ci vérifie cette signature au moyen de la clef publique CP2 du terminal (reçue par exemple du terminal au sein du certificat susmentionné), ce qui permet d'authentifier le terminal.

Au terme de l'étape AUT, si le terminal S.I. n'a pas été authentifié par le microcircuit, le procédé s'achève par une étape terminale E41, au cours de laquelle aucune action n'est exécutée par le microcircuit 100, et aucun droit supplémentaire n'est accordé au terminal. Le fonctionnement du microcircuit est ensuite suspendu jusqu'à ce qu'il soit connecté à nouveau à un terminal.

En revanche, si le terminal S.I. a été correctement authentifié lors de l'étape AUT, le procédé se poursuit par une étape DA au cours de laquelle le microcircuit identifie le terminal S.I. et détermine une action Ai à réaliser, sur la base de la table de correspondance T.

L'identification du terminal S.I. est réalisée en comparant un identifiant id transmis par ce dernier aux identifiant id1, id2...idi contenus dans la table de correspondance T mémorisée dans le microcircuit 100. Comme cela a été expliqué lors de la description de cette table de correspondance, l'identifiant id (par exemple le champ « Certificate Holder Reference », la clef publique CP2 du terminal, ou bien une empreinte numérique de la clef publique CP2 obtenue par une transformation déterministe de cette dernière) peut avoir été transmis au microcircuit 100 dès l'étape précédente AUT, au sein d'un certificat électronique inclus dans les données d'authentification dau. L'identifiant id peut aussi être transmis indépendamment de ces données dau, lors de l'étape DA.

On remarque que l'étape de comparaison peut être réalisée en comparant la totalité de l'identifiant reçu id aux identifiants contenues dans la table de correspondance T ou, en variante, en comparant une partie seulement de l'identifiant reçu id à une partie d'identifiant mémorisée dans la table de correspondance T, ce qui permet de mettre en œuvre une action donnée (associée dans la table à ladite partie d'identifiant) pour une famille de systèmes d'inspection ou de terminaux (dont les identifiants ont en commun ladite partie d'identifiant).

On comprend aussi que l'identifiant mémorisé peut être une partie de l'identifiant du terminal.

Si l'identifiant id du terminal S.I. n'est pas présent dans la table de correspondance T, le procédé se poursuit directement par l'étape d'émission de données d'identité EM décrite plus bas, au cours de laquelle le microcircuit 100 peut répondre à une requête rq de lecture des données d'identité 120, reçue du terminal S.I.

Si au contraire l'identifiant id du terminal S.I. correspond à un identifiant idi présent dans la table de correspondance T, le microcircuit 100 détermine alors qu'il doit réaliser l'action Ai. Avant de déterminer qu'il doit réaliser l'action Ai, le microcircuit 100 peut toutefois réaliser, de manière optionnelle, un test supplémentaire spécifique, lorsque celui-ci est présent dans la table T en correspondance de l'action Ai, comme cela été expliqué précédemment.

L'action Ai ainsi déterminée est ensuite exécutée à l'étape EA. Plusieurs exemples de telles actions sont présentés ci-dessous, lors de la description de différentes applications d'un tel procédé. De manière générale, l'exécution de l'action Ai peut comprendre :
- la lecture d'une partie des données privées 113,
- la transformation (ou modification), l'effacement, ou l'écriture de données d'identité à accès restreint 123 et/ou de données à usage national 124,
- l'écriture ou la modification de données 130 de suivi de l'utilisation du document d'identité 1
- l'activation d'une fonctionnalité, pouvant ainsi être ensuite mise en œuvre par le microcircuit 100 lors d'étapes ultérieures de l'utilisation du document d'identité 1 (cette fonctionnalité peut par exemple être une fonctionnalité de « marquage » ou de « dé-marquage » de données biométriques par le microcircuit 100, telle que présentée ci-dessous lors de la description des figures 5 et 6). L'action Ai peut aussi consister à n'effectuer aucune opération, comme cela a déjà été mentionné.

Une fois que l'étape EA a été réalisée, le procédé se poursuit par l'étape d'émission de données d'identité EM. Au cours de cette étape EM, le microcircuit 100 répond à une requête rq de lecture des données d'identité 120, reçue du terminal S.I., en communiquant à ce dernier tout ou partie des données d'identité 120 de son porteur (transfert de données di). Lors de cette étape d'émission EM, les données émises par le microcircuit 100 peuvent être sélectionnées parmi les données d'identité 120 en fonction de droits d'accès dai associés à l'identifiant idi dans la table de correspondance T.

Par exemple, dans le cas où le document d'identité 1 est un document de voyage électronique émis par un Etat de l'Union Européenne, des systèmes d'inspection douaniers d'autres Etats de l'Union Européenne ne peuvent pas détecter la présence de données à usage national 124, et ignorent donc leur présence.

On peut également prévoir que, si l'identifiant id du terminal S.I. ne fait pas partie de la table de correspondance T, alors seules les données d'identité à accès public 122 sont rendues accessibles par le microcircuit 100.

Des fonctionnalités avantageuses, s'ajoutant par exemple à la simple délivrance de données d'identités publiques 122, peuvent ainsi être obtenues, par un choix approprié des actions (A1,A2...Ai...) associées aux identifiants de systèmes d'inspection (id1,id2...idi...). Plusieurs exemples de telles fonctionnalités sont décrits ci-dessous.

Le fait que le microcircuit sélectionne et exécute lui-même une action, en fonction de l'identifiant associé à un terminal permet une grande souplesse dans (1) la configuration d'un document d'identité électronique, (2) dans l'ajout ou la suppression de telles fonctionnalités supplémentaires, et (3) dans l'activation ou la désactivation de fonctionnalités supplémentaires. Cette disposition permet en effet d'assurer une compatibilité très large d'un tel document d'identité avec des réseaux existants de terminaux (ou de systèmes d'inspection), et avec le système de gestion d'informations dont dépend un tel ensemble de terminaux (ou de systèmes d'inspection), et qui comprend en général une infrastructure gérant la distribution et la vérification de clefs cryptographiques utilisées par lesdits terminaux (ou « PKI », selon l'acronyme anglo-saxon de « Public Key Infrastructure»). En effet, (1) la configuration, (2) l'ajout ou la suppression de fonctionnalités supplémentaires, et (3) l'activation ou la désactivation de fonctionnalités supplémentaires n'impliquent pas de modifications d'un tel réseau de terminaux (ou de systèmes d'inspection), ni du système d'information correspondant, ce qui est extrêmement avantageux. L'accès à ces fonctionnalités se fait ainsi de manière transparente pour le terminal et le système d'information correspondant.

Une première application d'un procédé de configuration ou de reconfiguration selon l'invention, concerne le masquage ou le démasquage automatique de données contenues dans le microcircuit 100 d'un document d'identité 1, en fonction du terminal, en l'occurrence ici un système d'inspection, qui procède à la lecture électronique dudit document d'identité.

Un tel masquage automatique de données peut par exemple concerner des données à usage national telles que les données 124 et être réalisé comme suit :
- lorsqu'un système d'inspection douanier d'un poste frontalier de sortie de l'Etat émetteur du document d'identité 1 est identifié (au moyen de son identifiant Id) par le microcircuit 100,
- ou lorsqu'un système d'inspection est identifié (au moyen de son identifiant Id) par le microcircuit 100 comme étant étranger à l'Etat émetteur du document d'identité 1,
alors, les données à usage national 124 sont dissimulées, c'est-à-dire toujours présentes dans le microcircuit 100, mais rendues inaccessibles et non détectables pour un système communiquant avec le microcircuit par l'intermédiaire de son module de communication 101 (par exemple en modifiant un indicateur de statut de ces données prévu à cet effet).

Cela est concrètement possible en associant aux identifiants correspondant à ces systèmes d'inspection, dans la table de correspondance T, une action Ai comprenant l'effacement des données à usage national 124 de la zone de mémorisation des données à communiquer 120.

Une interface se connectant ensuite au microcircuit 100 ne peut donc plus accéder aux données à usage national 124 ni détecter leur présence dans le microcircuit 100 puisqu'elles sont alors absentes des zones de mémoire accessibles à une interface ou un dispositif extérieurs au microcircuit.

Symétriquement, les données à usage national 124 peuvent être révélées, dans les données à communiquer 120 (c'est-à-dire y être rendues accessibles, et éventuellement détectables), lorsqu'elles ne sont pas déjà présentes dans ces dernières et lorsqu'un système d'inspection douanier d'un poste frontalier d'entrée dans l'Etat émetteur du document d'identité 1 est identifié par le microcircuit 100. Cela est concrètement possible en associant aux identifiants correspondant à ces systèmes d'inspection, dans la table de correspondance T, une action Ai comprenant le test de la présence et de l'accessibilité des données à usage national 124 dans les données à communiquer 120 et, si ce n'est pas déjà le cas les révéler parmi les données à communiquer 120, afin qu'elles soient ultérieurement délivrées.

Un tel masquage et démasquage automatique des données à usage national 124 rend le document d'identité 1 particulièrement polyvalent puisqu'il peut remplir à la fois :
- une fonction strictement nationale, en mettant à disposition d'entités de l'Etat qui l'a émis des données d'identité de son porteur P réservées uniquement à un usage national, et
- une fonction d'identification de son porteur P à un niveau international, à la manière d'un document de voyage conventionnel.

Dans une seconde application, un procédé de configuration ou de reconfiguration d'un document d'identité selon l'invention peut être utilisé avantageusement pour adapter la qualité de données biométriques contenues dans ce document en fonction du terminal qui y accède.

Par exemple, dans le cas où le document d'identité 1 est un document de voyage électronique, la qualité d'une partie (ou de la totalité) des données biométriques contenues dans les données d'identité à accès restreint 123 peut être réduite dès qu'un terminal, en l'occurrence ici un système d'inspection, qui communique avec le microcircuit 100 du document d'identité 1 est identifié (au moyen de son identifiant) par ce dernier comme étant étranger à l'Etat qui a émis le document de voyage. A nouveau, cela est concrètement possible en associant aux identifiants correspondant à ces systèmes d'inspection/terminaux, dans la table de correspondance T, une action Ai correspondant à une réduction de la qualité de ces données biométriques.

En revanche, lorsqu'un système d'inspection qui communique avec le microcircuit 100 du document d'identité 1 est identifié (au moyen de son identifiant) par ce dernier comme appartenant au service des douanes (ou à la police aux frontières) de l'Etat qui a émis le document de voyage, la qualité des données biométriques contenues dans les données d'identité à accès restreint 123 peut être restaurée de manière à leur redonner leur qualité maximale d'origine.

Comme cela a été mentionné précédemment, ces données biométriques peuvent par exemple comprendre des données représentatives d'une image du visage du porteur P du document d'identité, des données représentatives d'une image d'une de ses mains, de l'un de ses iris, de son réseau veineux, ou encore d'une de ses empreintes digitales. La réduction de qualité d'une de ces images peut être obtenue en réduisant sa résolution, par exemple en réduisant le nombre d'éléments d'image (pixels) qu'elle comprend. Elle peut également être réduite en y superposant un signal parasite, par exemple un signal aléatoire, ou encore en lui appliquant une transformation, pouvant par exemple être inversée à l'aide de données cryptographiques annexes.

En pratique, la qualité des données biométriques contenues dans les données d'identité à accès restreint 123 peut par exemple être restaurée à partir d'une copie de sauvegarde de ces données biométriques, de qualité maximale, présente dans les données privées 113. En fonction du procédé utilisé pour réduire la qualité de cette image, cette dernière peut aussi être restaurée à l'aide de données cryptographiques annexes contenues par exemple dans les données d'application 112.

Selon l'entité dont il dépend, un tel système d'inspection peut, pour identifier le porteur P d'un document d'identité, requérir des données biométriques de qualité plus ou moins grande. En adaptant la qualité de ces données biométriques au minimum requis par un tel système d'inspection, on évite avantageusement de divulguer en qualité maximale des données biométriques du porteur P lorsque cela n'est pas nécessaire, réduisant ainsi la possibilité pour une entité malveillante de s'en emparer en qualité maximale. Cela protège l'identité du porteur et le caractère privé de ces données, d'autant qu'il est difficile d'utiliser ou de modifier une image dégradée.

De même, au cours d'un procédé de configuration ou de reconfiguration d'un document d'identité selon l'invention, la qualité d'une partie des données d'identité qu'il contient sous forme de textes peut être adaptée, en fonction du terminal qui y accède. Par exemple, l'adresse du Porteur peut être modifiée, en fonction du terminal qui accède au microcircuit 100, de manière à être présente dans ce dernier soit sous une forme dégradée (le numéro de rue ayant été supprimé de cette adresse, par exemple), soit sous forme complète.

Une troisième application d'un procédé de configuration ou de reconfiguration selon l'invention concerne l'enregistrement de statistiques, relatives au franchissement d'une frontière par un individu, dans le microcircuit 100 du document d'identité 1 qu'il porte. Cette application est présentée ci-dessous dans le cas d'une frontière séparant deux Etats, et dans le cas où le document d'identité 1 est un document de voyage électronique.

Lorsqu'un tel document d'identité 1 est présenté à un terminal, par exemple un système d'inspection, ce dernier est identifié par le microcircuit 100, comme cela a été expliqué précédemment. Une fonctionnalité d'enregistrement de statistiques de franchissement de frontière peut donc être obtenue en associant à l'identifiant correspondant à un terminal d'un poste d'une telle frontière (lors de la production du document d'identité 1) une action Ai comprenant l'écriture, dans les données 130 de suivi de l'utilisation du document d'identité 1, de données relatives à ce franchissement de frontière.

Les données relatives à ce franchissement de frontière peuvent comprendre :
- la valeur d'un compteur indiquant le nombre de fois où le document d'identité 1 a été présenté à un terminal donné d'un poste de ladite frontière,
- la valeur d'un compteur indiquant le nombre de fois que le document d'identité 1 a été présenté à un quelconque terminal faisant partie des systèmes d'inspection des postes de ladite frontière, et
- la date et l'heure de ce franchissement de frontière, lorsque ceux-ci sont accessibles au microcircuit 100.
- les données lues et non lues par le terminal, ainsi que les fonctionnalités utilisées et non utilisées.

Les statistiques de franchissement de frontières ainsi enregistrées peuvent ensuite être collectées par une entité de l'Etat qui a émis le document d'identité 1, par exemple par son service des douanes ou de police aux frontières. Pour permettre à ce dernier de collecter les données ainsi enregistrées, on peut associer aux identifiants correspondant à ce service des douanes une action Ai comprenant l'émission par le microcircuit 100 des données 130, au moyen de son module de communication 101 et de l'antenne 200

Cette application de suivi de franchissement de frontières a été présentée ci-dessus dans le cadre d'une frontière séparant deux Etats. Elle peut également être mise en œuvre pour établir des statistiques de franchissement de frontières délimitant des entités autre que des Etats, par exemple des frontières délimitant des organismes publics ou privés.

Dans une quatrième application envisageable, un procédé de configuration ou de reconfiguration selon l'invention peut également être mis en œuvre dans un microcircuit 100 d'un document d'identité 1 de manière à ce que ce dernier réponde à une requête de lecture rq reçue d'un terminal S.I. en lui transmettant des données préalablement sélectionnées en fonction de l'identifiant idi qui correspond à ce terminal.

De manière générale, lorsque des données d'identité contenues dans le microcircuit 100 sont transmises à un terminal, elles peuvent être accompagnées de données annexes permettant à ce terminal d'authentifier leur provenance. De telles données annexes d'authentification peuvent par exemple être obtenues par hachage et signature de manière à obtenir un condensat signé des données d'identité correspondantes. Dans ce cadre, il est utile de pouvoir sélectionner, grâce à un procédé selon l'invention, les données annexes d'authentification transmises à un terminal donné, parmi plusieurs telles données annexes d'authentification associées aux données d'identité contenues dans le microcircuit 100.

Un procédé selon l'invention peut donc être utilisé pour mettre en œuvre plusieurs fonctionnalités avantageuses, présentées ci-dessus, et intervenant lors d'étapes de lecture ou d'utilisation L du document d'identité 1.

Dans une autre application, un tel procédé peut également être avantageusement mis en œuvre lors d'étapes d'activation du document d'identité 1, réalisées au moment de la délivrance finale de ce document à son porteur P. La figure 6 représente schématiquement les principales étapes d'un exemple de procédé d'activation selon l'invention.

Ce dernier peut par exemple impliquer une transformation E50 de donnés biométriques du porteur P du document d'identité 1. De manière générale, au cours de cette transformation E50, des données de marquage, initialement combinées à des données biométriques du porteur P pour y former un tatouage ou un filigrane numérique, sont repérées parmi ces données biométriques et sont supprimées de manière à restaurer les dites données biométriques dans leur forme originale non combinée. Une telle technique de marquage des données biométriques dans certaines phases d'utilisation est par exemple décrite dans la demande de brevet EP 2 280 380.

Un exemple d'une telle transformation E50 est représenté schématiquement figure 5, dans le cas où les données biométriques du porteur P sont des données représentatives d'une image de son visage. Dans cet exemple, les données représentatives de cette image, lorsqu'initialement combinées à des données de marquage, prennent la forme d'une image 51 du visage du porteur P à laquelle est superposé un texte, à la manière d'un filigrane (dans cet exemple, il s'agit de l'expression anglo-saxonne « NOT VALID », signifiant « non valide »). La transformation E50 repère et supprime ce filigrane.

De telles données représentatives d'une image du visage de l'utilisateur peuvent être présentes dans le microcircuit 100 sous une forme transformée, obtenue par exemple par transformation de Fourier, par transformation en ondelettes, ou par une autre transformation déterministe inversible des données représentatives d'une image du visage de l'utilisateur.

La transformation E50, ainsi que les autres étapes représentées sur la figure 6, sont exécutées par le microcircuit 100.

Au cours du procédé d'activation représenté schématiquement sur cette figure, le document d'identité 1 est présenté à un terminal, en l'occurrence un système d'inspection S.I., avec lequel il communique par la suite au moyen de son module de communication 101 et de l'antenne 200.

Pour commencer, le système d'inspection S.I. peut authentifier le document d'identité 1, sur la base de ses données d'authentification 121, au cours d'une étape non représentée. Le microcircuit 100 authentifie ensuite le système d'inspection S.I., lors de l'étape AUTEM, selon les mêmes modalités que lors de l'étape d'authentification AUT présentée précédemment. Le microcircuit 100 teste aussi, lors de l'étape AUTEM, si ce système d'inspection est bien celui chargé de l'activation et de la délivrance du document d'identité 1, en comparant l'identifiant id qu'il a transmis à certains identifiants spécifiques parmi les identifiants id1, id2...idi de la table de correspondance T. Au terme de l'étape AUTEM, si le système d'inspection S.I. a été authentifié par le microcircuit 100, et a été identifié comme étant le système d'inspection chargé de l'activation et de la délivrance du document d'identité 1, le procédé d'activation se poursuit alors par l'étape AUTP.

Dans le cas contraire, le procédé s'achève par une étape terminale E61. Au terme de cette étape E61, on peut prévoir que les droits d'accès initialement associés au système d'inspection qui communique avec le microcircuit soient conservés, ou alors qu'ils soient perdus. Pouvoir modifier ainsi les droits d'accès de ce système d'inspection est intéressant, dans cette situation, puisque le document d'identité est alors dans une situation considérée comme sensible (puisqu'il n'a pas encore été délivré à son porteur selon les modalités prévues lors de sa fabrication), et que l'échec de l'authentification d'un système d'inspection qui se connecte au microcircuit dans cette situation peut indiquer un problème dans la livraison du document d'identité. Au terme de l'étape E61, le microcircuit 100 continue à répondre aux requêtes reçues de l'extérieur, conformément aux droits d'accès valides des terminaux ou des systèmes d'inspections qui s'y connectent.

Lors de l'étape AUTP, le microcircuit détermine si un individu « is » qui se présente au système d'inspection S.I. et qui sollicite le retrait du document d'identité 1 est bien le porteur P auquel ledit document est destiné. Pour cela, des données d'identité « dis » de l'individu « is » peuvent être transmises par le système d'inspection S.I. au microcircuit 100. Ces données d'identité «dis» peuvent être comparées aux données d'identité 120 et, de manière optionnelle, aux données privées 113. Lors de cette comparaison, le module de commande 102 peut notamment vérifier que le nom, la date de naissance et la nationalité indiqués par l'individu « is » coïncident avec les données d'identité publiques 122 contenues dans le microcircuit 100 du document d'identité 1. Lors de cette comparaison, le microcircuit 100 peut également vérifier que des données biométriques de l'individu « is » concordent avec des données biométriques faisant partie des données d'identité à accès restreint 123 contenues dans le microcircuit.

Au terme de l'étape AUTP, si le microcircuit 100 a déterminé que l'individu « is » est le porteur P auquel le document d'identité 1 est destiné, le procédé d'activation se poursuit alors par l'étape TP.

Dans le cas contraire, le procédé s'achève par une étape terminale E62 identique à l'étape E61.

Dans un autre mode de réalisation, ce n'est pas le microcircuit 100 qui vérifie que l'individu sollicitant le retrait du document d'identité 1 est bien le porteur P auquel est destiné le document d'identité 1, mais un agent de l'organisme qui le délivre. Pour cela, cet agent compare par exemple des données d'identité, extraites des données 120, et reçues du microcircuit puis affichées par le système d'inspection, à des données d'identité « dis » de l'individu « is » qui sollicite le retrait. Si cet agent constate que ces données coïncident, il peut alors valider le retrait du document d'identité dans une interface utilisateur du système d'inspection, qui peut ainsi transmettre au microcircuit un signal d'activation, qui signale à ce dernier qu'il peut procéder à l'étape suivante TP.

Au cours de l'étape TP, le module de commande 102 détermine si la transformation E50 a déjà été exécutée par le microcircuit. Si la transformation E50 a déjà été ainsi exécutée, le procédé s'achève par une étape terminale E63 identique à l'étape E61. Dans le cas contraire, le microcircuit 100 exécute des opérations ACT d'activation du document d'identité 1, par exemple en appliquant la transformation E50 aux données biométriques concernées, ou bien en rendant active une fonctionnalité de « dé-marquage » des données biométriques concernées, par exemple en modifiant la valeur d'une variable consultée lors de l'utilisation ultérieure du document d'identité et qui est indicative de l'activation de cette fonctionnalité. Si cette variable indique que ladite fonctionnalité est active, la transformation E50 est réalisée, lors de connexions ultérieures avec un système d'inspection ou un terminal authentifié et identifié par microcircuit 100.

Le module de commande 102 peut déterminer si la transformation E50 a déjà été exécutée, en lisant par exemple la valeur d'un compteur, stockée dans les données 130 de suivi de l'utilisation du document d'identité 1, initialement mise à 0, et incrémentée à chaque fois que la transformation E50 est réalisée par le microcircuit 100.

Lorsque la transformation E50 n'est pas réalisée directement lors du procédé d'activation lui même, mais ultérieurement, lors de connexions avec un système d'inspection ou un terminal identifié et éventuellement authentifié par microcircuit 100, comme cela est décrit ci-dessus, on peut prévoir que la transformation E50 n'est réalisée qu'un nombre déterminé de fois, lors desdites connexions. Pour mettre en œuvre cette fonctionnalité, le module de commande 102 peut, à nouveau, déterminer le nombre de fois que la transformation E50 a été exécutée en lisant la valeur du compteur mentionné ci-dessus.

Tant que ces étapes d'activation n'ont pas été réalisées, une partie (ou la totalité) des données biométriques du porteur P du document d'identité, retournées par le document d'identité 1, sont donc combinées à des données de marquage. Un tel marquage peut être utilisé pour indiquer que ledit document d'identité n'est, en l'état, pas valide. Dans ce cas, le document d'identité 1 passe d'un statut non-valide à un statut valide lors des étapes d'activation présentées ci-dessus.

Ces dernières ne peuvent être réalisées que si le document d'identité 1 est présenté au système d'inspection prévu initialement, lors de sa production, pour délivrer ledit document d'identité 1.

De même, elles ne peuvent être réalisées que si les données d'identité dis de l'individu qui sollicite le retrait du document d'identité correspondent aux données d'identité du porteur P auquel il est destiné, ces dernières étant enregistrées dans le microcircuit 100 du document d'identité 1 lors de sa production.

Ce procédé de validation permet donc de sécuriser considérablement la livraison et la délivrance d'un document d'identité à son porteur P, puisqu'une entité malveillante qui se serait emparée du document d'identité 1 avant sa validation ne serait pas en mesure de réaliser lesdites étapes de validation.

## Revendications

1. Procédé mis en œuvre dans un document d'identité (1) comprenant un microcircuit (100) et des moyens (200) pour faire communiquer le microcircuit (100) avec un terminal (S.l.), le microcircuit (100) étant conçu pour autoriser l'émission de données obtenues à partir de données mémorisées dans une zone de stockage en réponse à une requête (rq) reçue dudit terminal (S.I.), le procédé comprenant les étapes suivantes :
- réception par le microcircuit (100) d'un identifiant (id) dudit terminal (S.I.), et
- identification dudit terminal (S.I.), en comparant, au moins en partie, ledit identifiant (id) dudit terminal (S.I.) avec différents identifiants (id1, id2, idi) ou parties d'identifiants mémorisés dans le microcircuit (100),
le procédé étant **caractérisé en ce qu'**il comprend en outre les étapes suivantes :
- détermination d'une action (Ai) à réaliser, ladite action (Ai) étant sélectionnée en fonction de l'identifiant (id) du terminal (S.I.), parmi différentes actions (A1, A2, Ai) associées respectivement auxdits identifiants (id1, id2, idi) ou parties d'identifiants dans un module de mémorisation du microcircuit, et
- réalisation, par le microcircuit, de ladite action (Ai), déterminée précédemment,
deux au moins desdites actions (A1, A2, Ai), associées respectivement auxdits identifiants (id1, id2, idi) ou parties d'identifiants dans le module de mémorisation du microcircuit, correspondant respectivement à deux modifications différentes desdites données mémorisées dans la zone de stockage.

2. Procédé selon la revendication précédente, comprenant en outre une étape d'authentification dudit terminal (S.I.) par le microcircuit (100).

3. Procédé selon l'une des revendications précédentes, dans lequel le microcircuit (100) est conçu pour émettre au moins une partie desdites données postérieurement à l'étape de réalisation de ladite action (Ai).

4. Procédé selon l'une des revendications précédentes, dans lequel le microcircuit (100) est conçu pour émettre au moins une partie desdites données quel que soit le résultat de ladite comparaison.

5. Procédé selon l'une des revendications précédentes, dans lequel l'une au moins desdites modifications comprend la suppression ou l'ajout de données de marquage initialement combinées à des données biométriques d'un individu.

6. Procédé selon la revendication 5 dans lequel le microcircuit est conçu pour effectuer ladite suppression seulement si l'identifiant (id) reçu correspond à un identifiant mémorisé dans ledit microcircuit (100) et associé à un terminal (S.I.) prévu ainsi lors de la production dudit document d'identité pour délivrer ce dernier à son porteur (P).

7. Procédé selon l'une des revendications 1 à 4, dans lequel l'une au moins desdites modifications vise une variable d'activation lorsqu'un identifiant (id) reçu correspond à un identifiant mémorisé dans ledit microcircuit (100) et associé à un terminal (S.I.) prévu ainsi lors de la production dudit document d'identité pour délivrer ce dernier à son porteur (P), et dans lequel le microcircuit est conçu pour, préalablement à l'émission des données obtenues à partir des données mémorisées dans une zone de stockage, supprimer ou ajouter des données de marquage auxdites données obtenues en fonction de ladite variable d'activation.

8. Procédé selon l'une des revendications précédentes dans lequel ladite action (Ai) comprend l'incrémentation de la valeur d'un compteur dudit microcircuit enregistrant le nombre d'exécutions par ce dernier d'une action déterminée donnée.

9. Procédé selon la revendication précédente dans lequel ladite action (Ai) est en outre déterminée en fonction de la valeur du compteur.

10. Procédé selon l'une des revendications précédentes, dans lequel ladite action (Ai) comprend une modification du niveau de qualité des données biométriques mémorisées dans la zone de stockage.

11. Procédé selon l'une des revendications précédentes dans lequel ladite action (Ai) comprend l'incrémentation de la valeur d'un compteur mémorisé dans le microcircuit (100) et indicatif du nombre d'identifications par le microcircuit d'un terminal (S.I.) donné.

12. Procédé selon l'une des revendications précédentes, dans lequel ladite action (Ai) comprend la sélection desdites données d'identité émises parmi un ensemble de données d'identité contenues dans ledit microcircuit (100), en fonction du résultat de ladite comparaison.

13. Procédé selon la revendication 2 dans lequel ladite authentification comprend la vérification, au moyen d'une clef publique mémorisée dans ledit microcircuit (100), d'une signature d'un certificat électronique reçu du terminal (S.I.).

14. Document d'identité comprenant un microcircuit (100) comportant un module de mémorisation, et des moyens (200) pour faire communiquer le microcircuit (100) avec un terminal (S.I.), le microcircuit (100) étant conçu pour autoriser l'émission de données obtenues à partir de données mémorisées dans une zone de stockage, en réponse à une requête (rq) reçue dudit terminal (S.I.), ledit module de mémorisation mémorisant en outre au moins un identifiant et ledit microcircuit (100) étant conçu pour :
- recevoir un identifiant (id) dudit terminal (S.I.),
- identifier ledit terminal (S.l.), en comparant, au moins en partie, l'identifiant (id) reçu dudit terminal avec différents identifiants (id1, id2, idi) ou parties d'identifiants mémorisé dans ledit module de mémorisation,
**caractérisé en ce que** ledit microcircuit (100) est conçu en outre pour :
- déterminer une action (Ai) à réaliser, ladite action (Ai) étant sélectionnée, en fonction de l'identifiant (id) du terminal (S.l.), parmi différentes actions (A1, A2, Ai) associées respectivement auxdits identifiants (id1, id2, idi) ou parties d'identifiants dans un module de mémorisation du microcircuit, et
- réaliser ladite action (Ai) déterminée précédemment,
deux au moins desdites actions (A1, A2, Ai), associées respectivement auxdits identifiants (id1, id2, idi) ou parties d'identifiants dans le module de mémorisation du microcircuit, correspondant respectivement à deux modifications différentes desdites données mémorisées dans la zone de stockage.

## Patentansprüche

1. In ein Identitätsdokument (1) implementiertes Verfahren, umfassend eine Mikroschaltung (100) und Mittel (200), um die Mikroschaltung (100) mit einem Endgerät (S.I.) kommunizieren zu lassen, wobei die Mikroschaltung (100) gestaltet ist, um die Emission von Daten, die aus in einer Ablagezone gespeicherten Daten erhalten werden, als Antwort auf eine Anfrage (rq) freizugeben, die von dem Endgerät (S.I.) empfangen wird, wobei das Verfahren die folgenden Schritte umfasst:
- Empfangen durch die Mikroschaltung (100) eines Anmeldenamens (id) des Endgerätes (S.I.), und
- Identifizieren des Endgerätes (S.I.) durch Vergleichen, mindestens zum Teil, des Anmeldenamens (id) des Endgerätes (S.I.) mit verschiedenen Anmeldenamen (id1, id2, idi) oder Teilen von Anmeldenamen, die in der Mikroschaltung (100) gespeichert sind,
wobei das Verfahren **dadurch gekennzeichnet ist, dass** weiter die folgenden Schritte umfasst:
- Bestimmen einer auszuführenden Aktion (Ai), wobei die Aktion (Ai) in Abhängigkeit von dem Anmeldenamen (id) des Endgerätes (S.I.) aus unterschiedlichen Aktionen (A1, A2, Ai) ausgewählt wird, die jeweils den Anmeldenamen (id1, id2, idi) oder Teilen von Anmeldenamen in einem Speichermodul der Mikroschaltung zugewiesen sind, und
- Umsetzen durch die Mikroschaltung der zuvor bestimmten Aktion (Ai),
wobei mindestens zwei der Aktionen (A1, A2, Ai), die jeweils den Anmeldenamen (id1, id2, idi) oder Teilen von Anmeldenamen in dem Speichermodul der Mikroschaltung zugewiesen sind, jeweils zwei unterschiedlichen Änderungen der in der Ablagezone gespeicherten Daten entsprechen.

2. Verfahren nach dem vorstehenden Anspruch, weiter einen Schritt einer Authentifizierung des Endgerätes (S.I.) durch die Mikroschaltung (100) umfassend.

3. Verfahren nach einem der vorstehenden Ansprüche, wobei die Mikroschaltung (100) gestaltet ist, um mindestens einen Teil der Daten nach dem Umsetzungsschritt der Aktion (Ai) zu emittieren.

4. Verfahren nach einem der vorstehenden Ansprüche, wobei die Mikroschaltung (100) gestaltet ist, um mindestens einen Teil der Daten unabhängig von dem Ergebnis des Vergleichs zu emittieren.

5. Verfahren nach einem der vorstehenden Ansprüche, wobei mindestens eine der Änderungen das Löschen oder Hinzufügen von Markierungsdaten umfasst, die ursprünglich mit biometrischen Daten eines Individuums kombiniert worden sind.

6. Verfahren nach Anspruch 5, wobei die Mikroschaltung gestaltet ist, um das Löschen nur dann durchzuführen, wenn der empfangene Anmeldename (id) einem Anmeldenamen entspricht, der in der Mikroschaltung (100) gespeichert, und einem Endgerät (S.I.) zugewiesen ist, das somit bei der Herstellung des Identitätsdokuments vorgesehen ist, um dieses Letztere seinem Träger (P) zu übergeben.

7. Verfahren nach einem der Ansprüche 1 bis 4, wobei mindestens eine der Änderungen auf eine Aktivierungsvariable abzielt, wenn ein empfangener Anmeldename (id) einem Anmeldenamen entspricht, der in der Mikroschaltung (100) gespeichert, und einem Endgerät (S.I.) zugewiesen ist, das somit bei der Herstellung des Identitätsdokuments vorgesehen ist, um dieses Letztere seinem Träger (P) zu übergeben, und wobei die Mikroschaltung gestaltet ist, um vor der Emission der Daten, die aus den in einer Ablagezone gespeicherten Daten erhalten wurden, in Abhängigkeit von der Aktivierungsvariablen Markierungsdaten aus oder zu den erhaltenen Daten zu löschen oder hinzuzufügen.

8. Verfahren nach einem der vorstehenden Ansprüche, wobei die Aktion (Ai) das Inkrementieren des Wertes eines Zählers der Mikroschaltung umfasst, welche die Anzahl an Ausführungen einer gegebenen bestimmten Aktion durch diese Letztere speichert.

9. Verfahren nach dem vorstehenden Anspruch, wobei die Aktion (Ai) weiter in Abhängigkeit von dem Wert des Zählers bestimmt wird.

10. Verfahren nach einem der vorstehenden Ansprüche, wobei die Aktion (Ai) eine Änderung der Qualitätsstufe der in der Ablagezone gespeicherten biometrischen Daten umfasst.

11. Verfahren nach einem der vorstehenden Ansprüche, wobei die Aktion (Ai) das Inkrementieren des Wertes eines in der Mikroschaltung (100) gespeicherten und auf die Anzahl an Identifizierungen durch die Mikroschaltung eines gegebenen Endgerätes (S.I.) hinweisenden Zählers umfasst.

12. Verfahren nach einem der vorstehenden Ansprüche, wobei die Aktion (Ai) die Auswahl der emittierten Identitätsdaten aus einer Reihe von Identitätsdaten umfasst, die in der Mikroschaltung (100) enthalten sind, in Abhängigkeit von dem Ergebnis des Vergleiches.

13. Verfahren nach Anspruch 2, wobei die Authentifizierung die Verifizierung anhand eines öffentlichen Schlüssels, der in der Mikroschaltung (100) gespeichert ist, einer Signatur eines durch das Endgerät (S.I.) empfangenen elektronischen Zertifikats umfasst.

14. Identitätsdokument, umfassend eine Mikroschaltung (100), welche ein Speichermodul einschließt, und Mittel (200), um die Mikroschaltung (100) mit einem Endgerät (S.I.) kommunizieren zu lassen, wobei die Mikroschaltung (100) gestaltet ist, um die Emission von Daten, die aus in einer Ablagezone gespeicherten Daten erhalten werden, als Antwort auf eine Anfrage (rq) freizugeben, die von dem Endgerät (S.I.) empfangen wird, wobei das Speichermodul weiter mindestens einen Anmeldenamen speichert und die Mikroschaltung (100) gestaltet ist zum:
- Empfangen eines Anmeldenamens (id) des Endgerätes (S.I.), und
- Identifizieren des Endgerätes (S.I.) durch Vergleichen, mindestens zum Teil, des von dem Endgerät empfangenen Anmeldenamens (id) mit verschiedenen Anmeldenamen (id1, id2, idi) oder Teilen von Anmeldenamen, die in der Mikroschaltung (100) gespeichert sind,
**dadurch gekennzeichnet, dass** die Mikroschaltung (100) weiter gestaltet ist zum:
- Bestimmen einer auszuführenden Aktion (Ai), wobei die Aktion (Ai) in Abhängigkeit von dem Anmeldenamen (id) des Endgerätes (S.I.) aus unterschiedlichen Aktionen (A1, A2, Ai) ausgewählt wird, die jeweils den Anmeldenamen (id1, id2, idi) oder Teilen von Anmeldenamen in einem Speichermodul der Mikroschaltung zugewiesen sind, und
- Umsetzen der zuvor bestimmten Aktion (Ai),
wobei mindestens zwei der Aktionen (A1, A2, Ai), die jeweils den Anmeldenamen (id1, id2, idi) oder Teilen von Anmeldenamen in dem Speichermodul der Mikroschaltung zugewiesen sind jeweils zwei unterschiedlichen Änderungen der in der Ablagezone gespeicherten Daten entsprechen.

## Claims

1. A method implemented in an identity document (1) comprising a microcircuit (100) and means (200) enabling the microcircuit (100) to communicate with a terminal (S.I.), the microcircuit (100) being designed to permit the transmission of data obtained from data stored in a storage zone in response to a request (rq) received from said terminal (S.I.), the method comprising the following steps:
- reception by the microcircuit (100) of an identifier (id) of said terminal (S.I.), and
- identification of said terminal (S.I.) by comparing at least partially said identifier (id) of said terminal (S.I.) with distinct identifiers (id1, id2, idi) or portions of identifiers stored in the microcircuit (100),
the method being **characterised in that** it further comprises the following steps:
- determination of an action (Ai) to be performed, said action (Ai) being selected, as a function of the identifier (id) of the terminal (S.I.), among distinct actions (A1, A2, Ai) respectively associated to said identifiers (id1, id2, idi) or portions of identifiers in a memory module of the microcircuit; and
- performance, by the microcircuit, of the action (Ai) previously determined,
at least two of said actions (A1, A2, Ai), respectively associated to said identifiers (id1, id2, idi) or portions of identifiers in the memory module of the microcircuit, respectively corresponding to two distinct changes of said data stored in the storage zone.

2. The method according to the preceding claim, further comprising a step of authentication of said terminal (S.I.) by the microcircuit (100).

3. The method according to one of the preceding claims, wherein the microcircuit (100) is designed to transmit at least one portion of said data subsequently to the step of performance of said action (Ai).

4. The method according to one of the preceding claims, wherein the microcircuit (100) is designed to transmit at least one portion of said data whatever the result of said comparison.

5. The method according to one of the preceding claims, wherein at least one of said changes comprises the removal or addition of marking data initially combined with biometric data of an individual.

6. The method according to claim 5, wherein the microcircuit is designed to perform said removal only if the received identifier (id) corresponds to an identifier stored in said microcircuit (100) and associated with a terminal (S.I.) therefore intended during the production of said identity document to issue the latter to its holder (P).

7. The method according to one of claims 1-4, wherein at least one of said changes targets an activation variable, when a received identifier (id) corresponds to an identifier stored in said microcircuit (100) and associated with a terminal (S.I.) therefore intended during the production of said identity document to issue the latter to its holder (P), and wherein the microcircuit is designed to remove or add marking data to said obtained data on the basis of said activation variable, before the transmission of the data obtained from the data stored in a storage zone.

8. The method according to one of the preceding claims, wherein said action (Ai) comprises incrementing the value of a counter of said microcircuit recording the number of performances by the latter of a given set action.

9. The method according to the preceding claim, wherein said action (Ai) is furthermore determined on the basis of the value of the counter.

10. The method according to one of the preceding claims, wherein said action (Ai) comprises a change of the level of quality of the biometric data stored in the storage zone.

11. The method according to one of the preceding claims, wherein said action (Ai) comprises incrementing the value of a counter stored in the microcircuit (100) and indicative of the number of identifications by the microcircuit of a given terminal (S.I.).

12. The method according to one of the preceding claims, wherein said action (Ai) comprises selecting said transmitted identity data from among a set of identity data contained in said microcircuit (100), depending on the result of said comparison.

13. The method according to claim 2, wherein said authentication comprises verifying, by means of a public key stored in said microcircuit (100), a signature of an electronic certificate received from the terminal (S.I.).

14. An identity document comprising a microcircuit (100) including a memory module, and means (200) enabling the microcircuit (100) to communicate with a terminal (S.I.), the microcircuit (100) being designed to permit the transmission of data obtained from data stored in a storage zone, in response to a request (rq) received from said terminal (S.I.), said memory module furthermore storing at least one identifier and said microcircuit (100) being designed to:
- receive an identifier (id) of said terminal (S.I.),
- identify said terminal (S.I.) by at least partially comparing the received identifier (id) of said terminal with distinct identifiers (id1, id2, idi) or portions of identifiers stored in said memory module,
**characterised in that** said microcircuit (100) is furthermore designed to:
- determine an action (Ai) to be performed, said action (Ai) being selected, as a function of the identifier (id) of the terminal (S.I.), among distinct actions (A1, A2, Ai) respectively associated to said identifiers (id1, id2, idi) or portions of identifiers in a memory module of the microcircuit, and
- perform the action (Ai) previously determined,
at least two of said actions (A1, A2, Ai), respectively associated to said identifiers (id1, id2, idi) or portions of identifiers in the memory module of the microcircuit, respectively corresponding to two distinct changes of said data stored in the storage zone.
